# EUROPÄISCHE PATENTANMELDUNG

(11) **EP 2 711 269 A2**
(43) Veröffentlichungstag der Anmeldung: **26.03.2014**
(21) Anmeldenummer: 13179209.5
(22) Anmeldetag: 05.08.2013
(51) Int. Cl.: B62D 5/065, B62D 5/30

(54) **Lenkkraftunterstützungsvorrichtung und Verfahren sowie Steuerungseinrichtung zum Betreiben derselben**

(30) Priorität: 25.09.2012 DE 102012217250
(71) Anmelder: ZF Friedrichshafen AG, 88038 Friedrichshafen (DE)
(72) Erfinder: Eisele, Markus, 88048 Friedrichshafen (DE); Netzer, Christian, 88048 Friedrichshafen (DE); Wolfgang, Werner, 88213 Ravensburg (DE)

(57) **Zusammenfassung**

Verfahren zum Betreiben einer hydraulischen Lenkkraftunterstützungsvorrichtung eines Hybridfahrzeugs, wobei die Lenkkraftunterstützungsvorrichtung eine von einer Brennkraftmaschine (1) des Hybridfahrzeugs aus antreibbare, erste Lenkkraftunterstützungspumpe (2) und eine von einer elektrischen Maschine (8) des Hybridfahrzeugs aus antreibbare, zweite Lenkkraftunterstützungspumpe (9) aufweist, wobei dann, wenn die Brennkraftmaschine (2) des Hybridfahrzeugs ausgeschaltet werden soll, zunächst die zweite Lenkkraftunterstützungspumpe (9) eingeschaltet und das Ausschalten der Brennkraftmaschine (1) und damit der ersten Lenkkraftunterstützungspumpe (2) solange verzögert wird, bis die zweite Lenkkraftunterstützungspumpe (9) eine Lenkkraftunterstützung bereitstellt.

## Beschreibung

Die Erfindung betrifft ein Verfahren zum Betreiben einer hydraulischen Lenkkraftunterstützungsvorrichtung eines Hybridfahrzeugs. Des Weiteren betrifft die Erfindung eine Steuerungseinrichtung einer hydraulischen Lenkkraftunterstützungsvorrichtung eines Hybridfahrzeugs und eine hydraulische Lenkkraftunterstützungsvorrichtung eines Hybridfahrzeugs.

Hybridfahrzeuge, wie zum Beispiel Parallel-Hybridfahrzeuge und Seriell-Hybridfahrzeuge, können auf unterschiedliche Arten betrieben werden, so zum Beispiel verbrennungsmotorisch über eine Brennkraftmaschine des Hybridfahrzeugs, elektrisch über eine elektrische Maschine des Hybridfahrzeugs sowie hybridisch in einem kombinierten verbrennungsmotorischen und elektrischen Betrieb.

Hybridfahrzeuge verfügen, wie konventionelle Fahrzeuge, typischerweise über eine hydraulische Lenkkraftunterstützungsvorrichtung, die von der Brennkraftmaschine des Hybridfahrzeugs derart betrieben wird, dass die Brennkraftmaschine eine Hydraulikpumpe der hydraulischen Lenkkraftunterstützungsvorrichtung mechanisch antreibt, um so über die Hydraulikpumpe einen zum Betrieb der Lenkkraftunterstützungsvorrichtung erforderlichen Hydraulikdruck bzw. Hydraulikvolumenstrom und damit eine erforderliche Lenkkraftunterstützung bereitzustellen.

Dann, wenn die Brennkraftmaschine ausgeschaltet werden soll, ist dies jedoch nur dann möglich, wenn eine ausreichende Lenkkraftunterstützung von der Lenkkraftunterstützungsvorrichtung bereitgestellt werden kann, wenn dieselbe also mit einem ausreichend hohen Hydraulikdruck oder einem ausreichend hohen Hydraulikvolumenstrom versorgt werden kann. Hierzu kann es unter Umständen erforderlich sein, die Brennkraftmaschine bei Leerlaufdrehzahl weiter zu betreiben, um über die Lenkkraftunterstützungsvorrichtung eine ausreichend hohe Lenkkraftunterstützung bereitzustellen. Dies verfügt über den Nachteil, dass trotz eines an sich möglichen, rein elektrischen Fahrens bei ausgeschalteter Brennkraftmaschine über die in Leerlaufdrehzahl betriebene Brennkraftmaschine weiterhin Kraftstoff verbraucht wird, weiterhin Abgase emittiert werden und weiterhin der Geräuschpegel der Brennkraftmaschine vorliegt.

Um den obigen Nachteilen entgegenzuwirken, ist es grundsätzlich möglich, bei einem Hybridfahrzeug eine Lenkkraftunterstützungsvorrichtung vorzusehen, die ausschließlich eine elektrisch betriebene Lenkkraftunterstützungspumpe aufweist. Dies verfügt jedoch über den Nachteil, dass bei einer Fahrt unter Beteiligung der Brennkraftmaschine die Lenkkraftunterstützungspumpe dann elektrisch angetrieben werden muss.

Hiervon ausgehend liegt der vorliegenden Erfindung die Aufgabe zu Grunde, ein neuartiges Verfahren zum Betreiben einer hydraulischen Lenkkraftunterstützungsvorrichtung eines Hybridfahrzeugs sowie eine neuartige Steuerungseinrichtung und eine neuartige Lenkkraftunterstützungsvorrichtung zu schaffen.

Diese Aufgabe wird durch ein Verfahren zum Betreiben einer hydraulischen Lenkkraftunterstützungsvorrichtung eines Hybridfahrzeugs gemäß Patentanspruch 1 gelöst. Erfindungsgemäß wird dann, wenn die Brennkraftmaschine des Hybridfahrzeugs ausgeschaltet werden soll, zunächst eine zweite Lenkkraftunterstützungspumpe, die von einer elektrischen Maschine des Hybridfahrzeugs aus angetrieben wird, eingeschaltet und das Ausschalten der Brennkraftmaschine und damit einer von der Brennkraftmaschine aus antreibbaren, ersten Lenkkraftunterstützungspumpe solange verzögert wird, bis die von der elektrischen Maschine des Hybridfahrzeugs aus angetriebene Lenkkraftunterstützungspumpe eine Lenkkraftunterstützung bereitstellt.

Mit der hier vorliegenden Erfindung wird erstmals vorgeschlagen, dass bei einer Lenkkraftunterstützungsvorrichtung, die neben einer von der Brennkraftmaschine des Hybridfahrzeugs aus antreibbaren ersten Lenkkraftunterstützungspumpe eine von einer elektrischen Maschine des Hybridfahrzeugs aus antreibbare zweite Lenkkraftunterstützungspumpe aufweist, der Betrieb der ersten Lenkkraftunterstützungspumpe und der zweiten Lenkkraftunterstützungspumpe abhängig von einer Betriebssituation des Hybridfahrzeugs bestimmt werden. Dann, wenn die Brennkraftmaschine des Hybridfahrzeugs bei eingeschalteter erster Lenkkraftunterstützungspumpe ausgeschaltet werden soll, wird zunächst die zweite Lenkkraftunterstützungspumpe eingeschaltet und das Abschalten der Brennkraftmaschine und damit der ersten Lenkkraftunterstützungspumpe solange verzögert, bis die zweite Lenkkraftunterstützungspumpe eine ausreichend hohe Lenkkraftunterstützung bereitstellt.

Mit der Erfindung kann gewährleistet werden, dass stets eine ausreichend hohe Lenkkraftunterstützung bereitgestellt werden kann. Weiterhin wird vermieden, dass beide Lenkkraftunterstützungspumpen für längere Zeit gleichzeitig betrieben werden. Dies ist aus energetischer Sicht von Vorteil und weiterhin können Schäden an der Lenkkraftunterstützungsvorrichtung infolge eines länger andauernden Betriebs beider Lenkkraftunterstützungspumpen vermieden werden. Bei einem Fahrtmodus unter Beteiligung der Brennkraftmaschine wird die Lenkkraftunterstützung über die erste Lenkkraftunterstützungspumpe gewährleistet. Bei einem rein elektrischen Fahrtmodus wird die Lenkkraftunterstützung über die zweite Lenkkraftunterstützungspumpe gewährleistet. Eine steuerungseinrichtungsseitige Hybridstrategie bestimmt den Fahrtmodus und abhängig hiervon den Betrieb der Lenkkraftunterstützungspumpen bzw. der Lenkkraftunterstützungsvorrichtung.

Das Ausschalten der Brennkraftmaschine und damit der ersten Lenkkraftunterstützungspumpe wird vorzugsweise derart verzögert, dass die erste Lenkkraftunterstützungspumpe und die zweite Lenkkraftunterstützungspumpe in Summe einen in etwa konstanten Hydraulikdruck und/oder einen in etwa konstanten Hydraulikvolumenstrom bereitstellen. Dies ist zur Vermeidung von Schäden an der Lenkkraftunterstützungsvorrichtung sowie zur Bereitstellung der Lenkkraftunterstützung besonders vorteilhaft.

Vorzugsweise wird nach einer steuerungsseitigen Anforderung des Ausschaltens der Brennkraftmaschine das Ausschalten derselben um eine adaptiv anpassbare Verzögerungszeit verzögert. Dies erlaubt eine einfache und zuverlässige Umsetzung der Erfindung, und zwar eine sichere und einfache Vermeidung einer zu geringen Lenkkraftunterstützung und eine sichere und einfache Vermeidung von Schäden an der Lenkkraftunterstützungsvorrichtung, die durch den gleichzeitigen Betrieb beider Lenkkraftunterstützungspumpen verursacht werden können.

Nach einer Weiterbildung wird dann, wenn im Stillstand des Hybridfahrzeugs die Brennkraftmaschine ausgeschaltet ist und ein Anfahrwunsch vorliegt, die zweite Lenkkraftunterstützungspumpe eingeschaltet und von der elektrischen Maschine des Hybridfahrzeugs aus angetrieben. Mit dieser Weiterbildung der Erfindung kann beim rein elektrischen Anfahren eine ausreichend hohe Lenkkraftunterstützung bereitgestellt werden.

Vorzugsweise wird dann, wenn bei Fahrt des Hybridfahrzeugs oder im Stillstand des Hybridfahrzeugs die Drehzahl der Brennkraftmaschine größer als ein Grenzwert ist, die zweite Lenkkraftunterstützungspumpe ausgeschaltet. Hiermit kann sowohl bei Fahrt des Hybridfahrzeugs als auch im Stillstand desselben bei laufender Brennkraftmaschine vermieden werden, dass beide Lenkkraftunterstützungspumpen längere Zeit gleichzeitig laufen.

Vorzugsweise wird dann, wenn im Stillstand des Hybridfahrzeugs mit laufender zweiter Lenkkraftunterstützungspumpe eine Bremse länger als ein definierter Grenzwert bzw. eine definierte Zeitspanne betätigt wird, die zweite Lenkkraftunterstützungspumpe stillgesetzt. Hiermit kann im Stillstand des Hybridfahrzeugs gewährleistet werden, dass dann, wenn keine Lenkkraftunterstützung benötigt wird, die zweite Lenkkraftunterstützungspumpe stillgesetzt wird.

Nach einer vorteilhaften Weiterbildung wird überprüft, ob nach erfolgter Verzögerung des Ausschaltens der Brennkraftmaschine dieselbe tatsächlich ausgeschaltet ist, wobei dann, wenn hierbei festgestellt wird, dass der Brennkraftmaschine nicht ausgeschaltet ist, die zweite Lenkkraftunterstützungspumpe stillgesetzt wird. Nach einer weiteren vorteilhaften Weiterbildung wird überprüft, ob nach erfolgtem Einschalten der zweiten Lenkkraftunterstützungspumpe dieselbe tatsächlich eine ausreichend hohe Lenkkraftunterstützung bereitstellt, wobei dann, wenn hierbei festgestellt wird, dass die zweite Lenkkraftunterstützungspumpe keine ausreichend hohe Lenkkraftunterstützung bereitstellt, die zweite Lenkkraftunterstützungspumpe stillgesetzt und die Brennkraftmaschine gestartet wird. Mit diesen beiden vorteilhaften Weiterbildungen der Erfindung, die vorzugsweise in Kombination miteinander zum Einsatz kommen, kann eine Fehlfunktion der Lenkkraftunterstützungsvorrichtung sicher und zuverlässig vermieden werden.

Die erfindungsgemäße Steuerungseinrichtung ist in Patentanspruch 9 und die erfindungsgemäße hydraulische Lenkkraftunterstützungsvorrichtung ist in Patentanspruch 10 definiert.

Bevorzugte Weiterbildungen ergeben sich aus den Unteransprüchen und der nachfolgenden Beschreibung. Ausführungsbeispiele der Erfindung werden, ohne hierauf beschränkt zu sein, an Hand der Zeichnung näher erläutert. Dabei zeigt:
- Fig. 1: eine schematisierte Darstellung einer ersten hydraulischen Lenkkraftunterstützungsvorrichtung eines Hybridfahrzeugs;
- Fig. 2: eine schematisierte Darstellung einer zweiten hydraulischen Lenkkraftunterstützungsvorrichtung eines Hybridfahrzeugs; und
- Fig. 3: ein Diagramm zur Verdeutlichung des erfindungsgemäßen Verfahrens zum Betreiben einer hydraulischen Lenkkraftunterstützungsvorrichtung eines Hybridfahrzeugs.

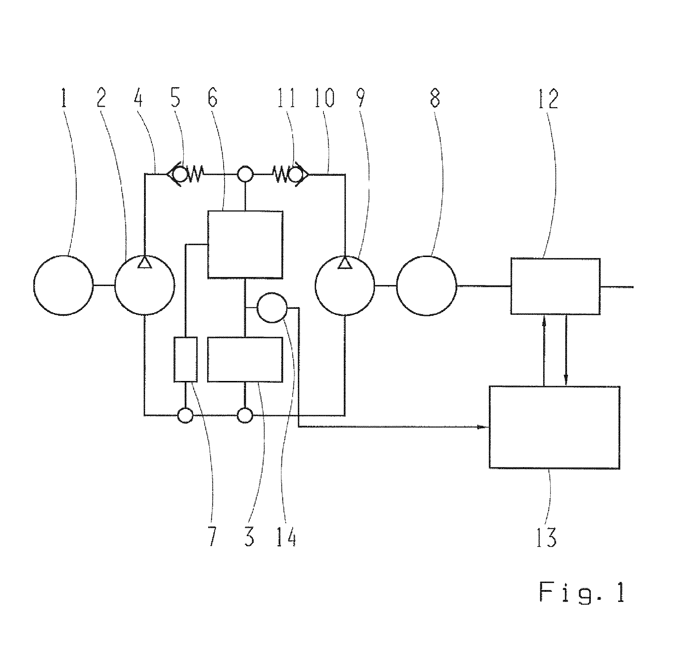

Fig. 1 zeigt eine schematisierte Darstellung einer hydraulischen Lenkkraftunterstützungsvorrichtung eines Hybridfahrzeugs, wobei die Lenkkraftunterstützungsvorrichtung eine von einer Brennkraftmaschine 1 des Hybridfahrzeugs aus mechanisch antreibbare erste Lenkkraftunterstützungspumpe 2 aufweist. Mit dieser ersten Lenkkraftunterstützungspumpe 2, die von der Brennkraftmaschine 1 des Hybridfahrzeugs aus mechanisch angetrieben wird, kann in Richtung auf ein Lenkgetriebe 3 ein definierter Hydraulikölvolumenstrom mit einem definierten Hydrauliköldruck bereitgestellt werden, wobei in eine entsprechende Hydraulikleitung 4 einerseits ein Rückschlagventil 5 und andererseits ein Druckbegrenzungsventil 6 integriert ist, um das Lenkgetriebe 3 vor einem Überdruck zu schützen. Im Falle des Überdrucks kann überschüssiges Hydrauliköl in Richtung auf einen Vorratstank 7 abgeleitet werden.

Zusätzlich zu der von der Brennkraftmaschine 1 aus mechanisch antreibbaren, ersten Lenkkraftunterstützungspumpe 2 umfasst die Lenkkraftunterstützungsvorrichtung eine von einer elektrischen Maschine 8 des Hybridfahrzeugs aus elektrisch antreibbare, zweite Lenkkraftunterstützungspumpe 9, mit Hilfe derer ebenfalls ein Hydraulikölvolumenstrom bzw. ein entsprechender Hydrauliköldruck dem Lenkgetriebe 3 bereitgestellt werden kann, wobei in eine entsprechende Hydraulikleitung 10 wiederum ein Rückschlagventil 11 integriert ist. Stromabwärts der beiden Rückschlagventile 5 und 11 sind die beiden Hydraulikölleitungen 4 und 10 zusammengeführt bzw. vereinigt, sodass demnach das Druckbegrenzungsventil 6 sowohl bei Betrieb der ersten Lenkkraftunterstützungspumpe 2 der Lenkkraftunterstützungsvorrichtung als auch bei Betrieb der zweiten Lenkkraftunterstützungspumpe 9 der Lenkkraftunterstützungsvorrichtung wirksam ist.

Fig. 1 zeigt weiterhin eine Spannungsversorgungseinrichtung 12 für die elektrische Maschine 8, wobei im gezeigten Ausführungsbeispiel die elektrische Maschine 8 mit Drei-Phasen-Drehstrom versorgt wird. Im Unterschied hierzu ist es auch möglich, die elektrische Maschine 8 ausgehend von der Spannungsversorgungseinrichtung 12 mit einem Zwei-Phasen-Gleichstrom oder Zwei-Phasen-Wechselstrom zu versorgen.

Fig. 1 zeigt weiterhin eine Steuerungseinrichtung 13, die mit der Spannungsversorgungseinrichtung 12 Daten austauscht. Bei der Steuerungseinrichtung 13, die dem Betrieb der Lenkkraftunterstützungsvorrichtung dient, handelt es sich vorzugsweise um eine sogenannte Hybridsteuerungseinrichtung. Weiterhin ist in Fig. 1 ein Drucksensor 14 gezeigt, der den Druck stromabwärts des Druckbegrenzungsventils 6 misst und einen entsprechenden Messwert der Steuerungseinrichtung 13 bereitstellt.

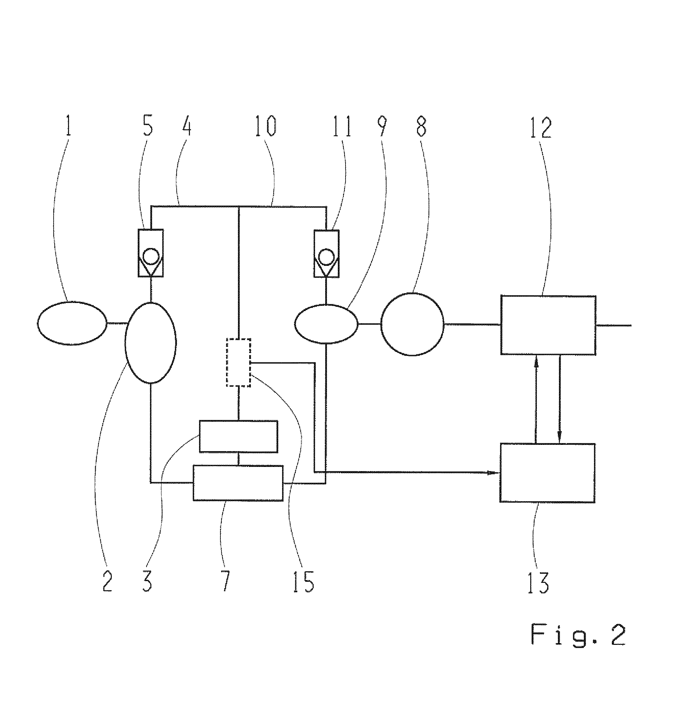

Eine Variante einer Lenkkraftunterstützungsvorrichtung für ein Hybridfahrzeug zeigt Fig. 2, wobei in Fig. 2 zur Vermeidung unnötiger Wiederholungen für gleiche Baugruppen gleiche Bezugsziffern verwendet werden wie im Ausführungsbeispiel der Fig. 1. Das Ausführungsbeispiel der Fig. 2 unterscheidet sich vom Ausführungsbeispiel der Fig. 1 dadurch, dass kein Druckbegrenzungsventil vorhanden ist, und dass den stromabwärts der Rückschlagventile 5 und 11 vereinigten Hydraulikleitungen 5, 10 ein Volumenstromsensor 15 zugeordnet ist, mit Hilfe dessen die Größe des Volumenstroms gemessen werden kann. Ein entsprechender Messwert wird wiederum der Steuerungseinrichtung 13 bereitgestellt.

Erfindungsgemäß wird nun eine solche hydraulische Lenkkraftunterstützungsvorrichtung eines Hybridfahrzeugs derart betrieben, dass dann, wenn die Brennkraftmaschine 1 läuft und dieselbe die erste Lenkkraftunterstützungspumpe 2 mechanisch antreibt, und wenn weiterhin die Brennkraftmaschine 1 z.B. bedingt durch eine Betriebsstrategie des Hybridfahrzeugs ausgeschaltet werden soll, zunächst die zweite Lenkkraftunterstützungspumpe 9 eingeschaltet wird, indem dieselbe ausgehend von der elektrischen Maschine 8 angetrieben wird, und dass weiterhin das Abschalten der Brennkraftmaschine 1 und damit der ersten Lenkkraftunterstützungspumpe 2 solange verzögert wird, bis die zweite Lenkkraftunterstützungspumpe 9 eine Lenkkraftunterstützung bereitstellt.

So kann einerseits ein gleichzeitiger Betrieb beider Lenkkraftunterstützungspumpen 2 und 9 über eine längere Zeit vermieden werden, andererseits wird gewährleistet, dass stets eine ausreichend hohe Lenkkraftunterstützung bereitgestellt werden kann. Dadurch, dass ein gleichzeitiger Betrieb beider Lenkkraftunterstützungspumpen 2 und 9 über längere Zeit vermieden wird, können Schäden an der Lenkkraftunterstützungsvorrichtung vermieden werden, die durch den gleichzeitigen Betrieb beider Lenkkraftunterstützungspumpen 2 und 9 verursacht werden können.

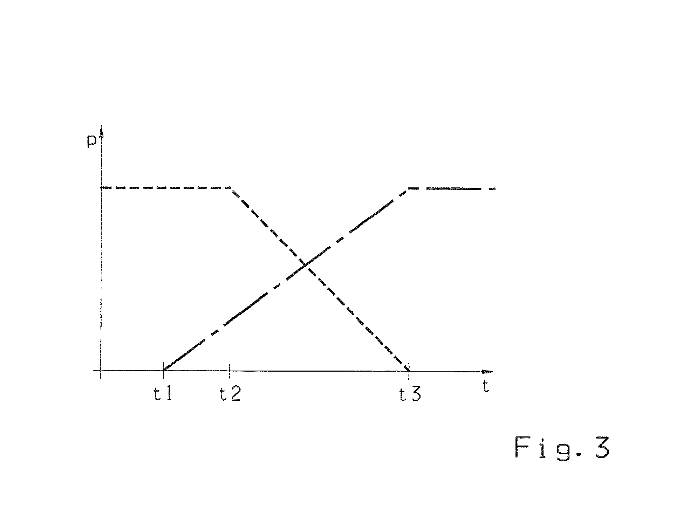

Fig. 3 visualisiert mit einem Zeitdiagramm, in welchem über der Zeit t ein Hydraulikdruck P aufgetragen ist, den obigen Betrieb der Lenkkraftunterstützungsvorrichtung, wobei zum Zeitpunkt t1 bei laufender Brennkraftmaschine 1, bei laufender erster Lenkkraftunterstützungspumpe 2 und bei stillstehender zweiter Lenkkraftunterstützungspumpe 9 steuerseitig ein Ausschalten der Brennkraftmaschine 1 angefordert wird.

Zunächst wird, beginnend zum Zeitpunkt t1, die zweite Lenkkraftunterstützungspumpe 9, die ausgehend von der elektrischen Maschine 8 elektrisch betrieben wird, eingeschaltet, wobei das Ausschalten der Brennkraftmaschine 1 und damit das Ausschalten der von der Brennkraftmaschine 1 mechanisch betriebenen ersten Lenkkraftunterstützungspumpe 2 bis zum Zeitpunkt t2 verzögert wird. Beginnend mit dem Zeitpunkt t2 wird die Brennkraftmaschine 1 stillgesetzt, wobei dieselbe zum Zeitpunkt t3 vollständig stillgesetzt ist.

Zwischen den Zeitpunkten t2 und t3 läuft die zweite Lenkkraftunterstützungspumpe 9, die von der elektrischen Maschine 8 aus elektrisch betrieben wird, an bzw. hoch, während die erste, von der Brennkraftmaschine 1 aus mechanisch betriebene Lenkkraftunterstützungspumpe 2 austrudelt, und zwar derart, dass dieselben in Summe einen konstanten Hydrauliköldruck und/oder Hydraulikölvolumenstrom bereitstellen, um eine konstante Lenkkraftunterstützung zu gewährleisten.

In einer vorteilhaften Ausprägung des erfindungsgemäßen Verfahrens wird nach einer steuerungsseitigen Anforderung des Ausschaltens der Brennkraftmaschine 1 das tatsächliche Abschalten bzw. Ausschalten derselben um eine adaptiv anpassbare Verzögerungszeit Δt=t2-t1 verzögert.

Hierbei kann ausgehend von einer vorgegebenen Verzögerungszeit für jede nachfolgende Umschaltung von der mechanisch angetriebenen Lenkkraftunterstützungspumpe 2 auf die elektrisch angetriebene Lenkkraftunterstützungspumpe 9 die Verzögerungszeit um ein definiertes Inkrement bzw. um einen definierten Zeitschritt reduziert werden, und zwar so lange, bis bei einer Umschaltung über die Sensoren 14 bzw. 15 ein Einbruch im Hydrauliköldruck bzw. im Hydraulikölvolumenstrom detektiert wird. Anschließend hieran wird dann die Verzögerungszeit wiederum um ein Inkrement bzw. einen Zeitschritt erhöht, wobei dann die Adaption der Verzögerungszeit abgeschlossen ist. Hiermit kann auf besonders einfache Art und Weise eine optimale abgestimmte Verzögerungszeit Δt=t2-t1 für das tatsächliche Ausschalten der Brennkraftmaschine 1 bestimmt werden.

Dann, wenn im Stillstand des Hybridfahrzeugs die Brennkraftmaschine 1 ausgeschaltet ist, und wenn weiterhin ein fahrerseitiger Fahrwunsch erkannt wird, wird die zweite Lenkkraftunterstützungspumpe 9 eingeschaltet und von der elektrischen Maschine 8 des Hybridfahrzeugs aus elektrisch angetrieben, um dann für einen elektrischen Anfahrvorgang eine ausreichend hohe Lenkkraftunterstützung bereitzustellen.

Auf einen Anfahrwunsch kann dadurch geschlossen werden, dass bei einer angeforderten Vorwärtsfahrtstufe D oder Rückwärtsfahrtstufe R eine Bremse des Hybridfahrzeugs nicht betätigt wird bzw. ist. Zur Ermittlung, ob eine betätigte oder nicht betätigte Bremse vorliegt, können Signale einer Betriebsbremse und/oder Signale einer Feststellbremse und/oder bei einem Bus Signale einer Haltestellenbremse ausgewertet werden. Diese Bremssignale können in beliebiger Kombination ausgewertet werden.

Dann, wenn bei einer Fahrt des Hybridfahrzeugs oder auch im Stillstand des Hybridfahrzeugs bei zugestarteter Brennkraftmaschine 1 die Drehzahl derselben größer als ein Grenzwert wird, wird die zweite Lenkkraftunterstützungspumpe 9 ausgeschaltet, um Schäden der Lenkkraftunterstützungsvorrichtung zu vermeiden.

Dann, wenn im Stillstand des Hybridfahrzeugs bei laufender zweiter Lenkkraftunterstützungspumpe 9 eine Bremse des Hybridfahrzeugs länger als eine definierte Zeitspanne betätigt ist, wird die zweite Lenkkraftunterstützungspumpe 9 vorzugsweise abgeschaltet bzw. stillgesetzt, da dann keine Lenkkraftunterstützung benötigt wird.

Dies kann z.B. dann der Fall sein, wenn das Hybridfahrzeug aus elektrischer Fahrt heraus zum Stillstand kommt und ein Bremspedal betätigt ist. Sobald ein Anfahrwunsch erkannt wird, kann die Lenkkraftunterstützungspumpe 9 wieder eingeschaltet werden. Wird jedoch das Bremspedal nachfolgend wieder betätigt, dann wird die zweite Lenkkraftunterstützungspumpe 9 wieder abgeschaltet bzw. stillgesetzt und bleibt solange stillgesetzt, solange das Bremspedal betätigt ist.

Weiterhin ist nach einer vorteilhaften Weiterbildung der Erfindung vorgesehen, dass überprüft wird, ob nach einem erfolgten Einschalten der elektrisch betriebenen zweiten Lenkkraftunterstützungspumpe 9 dieselbe tatsächlich eine ausreichend hohe Lenkkraftunterstützung bereitstellt. Dies kann dadurch erfolgen, dass ein bereitgestellter Hydraulikdruck oder ein bereitgestellter Hydraulikvolumenstrom über die Sensoren 14 oder 15 überwacht wird.

Wird hierbei festgestellt, dass die zweite Lenkkraftunterstützungspumpe 9 keine ausreichend hohe Lenkkraftunterstützung bereitstellt, wird die zweite Lenkkraftunterstützungspumpe 9 stillgesetzt bzw. ausgeschaltet und die Brennkraftmaschine 1 gestartet, um dann ausgehend von der Brennkraftmaschine 1 über die von derselben angetriebene erste Lenkkraftunterstützungspumpe 2 eine ausreichende Lenkkraftunterstützung zu gewährleisten. Wird hierbei festgestellt, dass die zweite Lenkkraftunterstützungspumpe 9 eine ausreichend hohe Lenkkraftunterstützung bereitstellt, ist kein steuerungsseitiger Eingriff erforderlich.

Eine weitere Funktionsüberprüfung erfolgt derart, dass nach erfolgter Verzögerung des Ausschaltens der Brennkraftmaschine 1 überprüft wird, ob dieselbe tatsächlich ausgeschaltet ist. Wird hierbei festgestellt, dass die Brennkraftmaschine 1 nicht ausgeschaltet ist, wird die zweite Lenkkraftunterstützungspumpe 9 stillgesetzt bzw. ausgeschaltet, um eine Überversorgung der Lenkkraftunterstützungsvorrichtung mit einem zu hohen Hydraulikdruck bzw. einem zu hohen Hydraulikvolumenstrom zu vermeiden. Ein nachfolgendes Einschalten der zweiten Lenkkraftunterstützungspumpe 9 wird dann für eine definierte Zeitspanne blockiert bzw. nicht freigegeben. Wird hierbei festgestellt, dass die Brennkraftmaschine 1 ausgeschaltet ist, ist kein steuerungsseitiger Eingriff erforderlich.

Das erfindungsgemäße Verfahren wird von der Steuerungseinrichtung 13, bei welcher es sich vorzugsweise um eine Hybridsteuerungseinrichtung handelt, steuerungsseitig durchgeführt. Die Steuerungseinrichtung 13 umfasst Mittel zur Durchführung des Verfahrens, nämlich Datenschnittstellen zum direkten Datenaustausch mit den beteiligten Baugruppen oder zum indirekten Datenaustausch mit den beteiligten Baugruppen über eine weitere Steuerungseinrichtung, einen Prozessor mit einer Hybridstrategie zur Datenverarbeitung und Generierung von Stellsignalen und einen Speicher zur Datenspeicherung.

Die hydraulische Lenkkraftunterstützungsvorrichtung umfasst zusätzlich zu einer von der Brennkraftmaschine 1 des Hybridfahrzeugs aus antreibbaren, ersten Lenkkraftunterstützungspumpe 2 die von der elektrischen Maschine 8 des Hybridfahrzeugs aus antreibbare, zweite Lenkkraftunterstützungspumpe 9 und die Steuerungseinrichtung 13 zur Durchführung des Verfahrens.

### Bezugszeichen

- 1: Brennkraftmaschine
- 2: erste Lenkkraftunterstützungspumpe
- 3: Lenkgetriebe
- 4: Hydraulikleitung
- 5: Rückschlagventil
- 6: Druckbegrenzungsventil
- 7: Vorratstank
- 8: elektrische Maschine
- 9: zweite Lenkkraftunterstützungspumpe
- 10: Hydraulikleitung
- 11: Rückschlagventil
- 12: Spannungsversorgungseinrichtung
- 13: Steuerungseinrichtung
- 14: Drucksensor
- 15: Volumenstromsensor

## Patentansprüche

1. Verfahren zum Betreiben einer hydraulischen Lenkkraftunterstützungsvorrichtung eines Hybridfahrzeugs, wobei die Lenkkraftunterstützungsvorrichtung eine von einer Brennkraftmaschine (1) des Hybridfahrzeugs aus antreibbare, erste Lenkkraftunterstützungspumpe (2) und eine von einer elektrischen Maschine (8) des Hybridfahrzeugs aus antreibbare, zweite Lenkkraftunterstützungspumpe (9) aufweist, wobei dann, wenn die Brennkraftmaschine (2) des Hybridfahrzeugs ausgeschaltet werden soll, zunächst die zweite Lenkkraftunterstützungspumpe (9) eingeschaltet und das Ausschalten der Brennkraftmaschine (1) und damit der ersten Lenkkraftunterstützungspumpe (2) solange verzögert wird, bis die zweite Lenkkraftunterstützungspumpe (9) eine Lenkkraftunterstützung bereitstellt.

2. Verfahren nach Anspruch 1, **dadurch gekennzeichnet, dass** nach einer steuerungsseitigen Anforderung des Ausschaltens der Brennkraftmaschine (1) das Ausschalten derselben um eine adaptiv anpassbare Verzögerungszeit verzögert wird.

3. Verfahren nach Anspruch 1 oder 2, **dadurch gekennzeichnet, dass** das Ausschalten der Brennkraftmaschine (1) und damit der ersten Lenkkraftunterstützungspumpe (2) derart verzögert wird, dass die erste Lenkkraftunterstützungspumpe (2) und die zweite Lenkkraftunterstützungspumpe (9) in Summe einen in etwa konstanten Hydraulikdruck und/oder einen in etwa konstanten Hydraulikvolumenstrom bereitstellen.

4. Verfahren nach einem der Ansprüche 1 bis 3, **dadurch gekennzeichnet, dass** dann, wenn im Stillstand des Hybridfahrzeugs die Brennkraftmaschine (1) ausgeschaltet ist und ein fahrerseitiger Anfahrwunsch vorliegt, die zweite Lenkkraftunterstützungspumpe (9) eingeschaltet und von der elektrischen Maschine (8) des Hybridfahrzeugs aus angetrieben wird.

5. Verfahren nach einem der Ansprüche 1 bis 4, **dadurch gekennzeichnet, dass** dann, wenn bei Fahrt des Hybridfahrzeugs oder im Stillstand des Hybridfahrzeugs die Drehzahl der zugestarteten Brennkraftmaschine (1) größer als ein Grenzwert wird, die zweite Lenkkraftunterstützungspumpe (9) ausgeschaltet wird.

6. Verfahren nach einem der Ansprüche 1 bis 5, **dadurch gekennzeichnet, dass** dann, wenn im Stillstand des Hybridfahrzeugs mit laufender zweiter Lenkkraftunterstützungspumpe (9) eine Bremse länger als ein definierter Grenzwert betätigt wird, die zweite Lenkkraftunterstützungspumpe (9) stillgesetzt wird.

7. Verfahren nach einem der Ansprüche 1 bis 6, **dadurch gekennzeichnet, dass** überprüft wird, ob nach erfolgter Verzögerung des Ausschaltens der Brennkraftmaschine (1) dieselbe tatsächlich ausgeschaltet ist, wobei dann, wenn hierbei festgestellt wird, dass der Brennkraftmaschine (1) nicht ausgeschaltet ist, die zweite Lenkkraftunterstützungspumpe (9) stillgesetzt wird.

8. Verfahren nach einem der Ansprüche 1 bis 7, **dadurch gekennzeichnet, dass** überprüft wird, ob nach erfolgtem Einschalten der zweiten Lenkkraftunterstützungspumpe (9) dieselbe tatsächlich eine ausreichend hohe Lenkkraftunterstützung bereitstellt, wobei dann, wenn hierbei festgestellt wird, dass die zweite Lenkkraftunterstützungspumpe keine ausreichend hohe Lenkkraftunterstützung bereitstellt, die zweite Lenkkraftunterstützungspumpe (9) stillgesetzt und die Brennkraftmaschine (1) gestartet wird.

9. Steuerungseinrichtung einer hydraulischen Lenkkraftunterstützungsvorrichtung eines Hybridfahrzeugs, **gekennzeichnet durch** Mittel zur Durchführung des Verfahrens nach einem der Ansprüche 1 bis 8.

10. Hydraulische Lenkkraftunterstützungsvorrichtung eines Hybridfahrzeugs, mit einer von einer Brennkraftmaschine (1) des Hybridfahrzeugs aus antreibbaren, ersten Lenkkraftunterstützungspumpe (2), mit einer von einer elektrischen Maschine (8) des Hybridfahrzeugs aus antreibbaren, zweiten Lenkkraftunterstützungspumpe (9), **gekennzeichnet durch** eine Steuerungseinrichtung nach Anspruch 9.
